# EUROPÄISCHE PATENTSCHRIFT

(11) **EP 1 772 753 B1**
(45) Veröffentlichungstag und Bekanntmachung des Hinweises auf die Patenterteilung: **15.08.2012**
(21) Anmeldenummer: 06018614.5
(22) Anmeldetag: 06.09.2006
(51) Int. Cl.: G01V 8/20

(54) **Verfahren zum Betrieb eines Lichtgitters**
Method for operating a light curtain
Procédé d'utilisation d'un rideau lumineux

(30) Priorität: 05.10.2005 DE 102005047776
(43) Veröffentlichungstag der Anmeldung: 11.04.2007
(73) Patentinhaber: Leuze electronic GmbH + Co. KG, 73277 Owen/Teck (DE)
(72) Erfinder: Haberer, Hermann, 81379 München (DE); Parstorfer, Bernhard, 82152 Planegg (DE)
(74) Vertreter: Ruckh, Rainer Gerhard

(56) Entgegenhaltungen:
- DE-A1- 4 338 978
- DE-A1- 10 046 136
- DE-U1- 20 216 230
- US-A- 4 650 990

## Beschreibung

Die Erfindung betrifft ein Verfahren zum Betrieb eines Lichtgitters gemäß dem Oberbegriff des Anspruchs 1.

Ein derartiges Lichtgitter ist aus der DE 39 39 191 A1 bekannt. Das Lichtgitter weist zur Überwachung eines flächigen Überwachungsbereichs eine Sendereinheit und eine Empfängereinheit auf, die an gegenüberliegenden Rändern des Überwachungsbereichs angeordnet sind. Die Sendereinheit weist eine Anordnung von nebeneinander liegend angeordneten, Sendelichtstrahlen emittierenden Sendern auf. Entsprechend weist die Empfängereinheit eine Anordnung von nebeneinander liegend angeordneten Empfängern auf. Jedem Sender ist dabei ein Empfänger zur Ausbildung einer Strahlachse zugeordnet. Bei freiem Strahlengang werden die Empfänger mit den von vom jeweils zugeordneten Sender emittierten Sendelichtstrahlen beaufschlagt. Befindet sich ein Objekt im Strahlengang, so wird der Strahlengang der Sendelichtstrahlen wenigstens eines Senders unterbrochen, so dass diese nicht mehr auf den zugeordneten Empfänger oder die zugeordneten Empfänger auftreffen, wodurch ein Objektfeststellungssignal generiert wird.

Bei dem Betrieb des Lichtgitters werden die Sender und Empfänger der einzelnen Strahlachsen zyklisch nacheinander aktiviert. Die Synchronisierung der Sender und der Empfänger erfolgt auf optischem Weg. Hierzu sendet der Sender der ersten Strahlachse Sendelichtstrahlen mit einer spezifischen Kennung aus. Die übrigen Sender senden Sendelichtstrahlen mit jeweils einer identischen Kennung aus, die sich von der Kennung des ersten Senders unterscheidet.

Somit kann die sich von der Kennung der übrigen Sender unterscheidende Kennung des ersten Senders zur optischen Synchronisierung der Sender und der Empfänger genutzt werden.

Derartige Lichtgitter werden insbesondere im Bereich des Personenschutzes eingesetzt. Beispielsweise werden die Lichtgitter zur Überwachung von sicherheitskritischen Bereichen an Werkzeugmaschinen, insbesondere Pressen oder dergleichen, eingesetzt.

Bei derartigen Anwendungen müssen sicherheitsrelevante Objekteingriffe wie das Eintreten einer Person in den sicherheitskritischen Bereich sicher erkannt werden, damit durch das im Lichtgitter generierte Objektfeststellungssignal ein Abschaltbefehl für die zu überwachende Maschine erzeugt wird, um Gefährdungen für die jeweilige Person ausschließen zu können.

Je nach Anwendungsfall kann der gesamte mit dem Lichtgitter erfasste Überwachungsbereich einen derartigen sicherheitskritischen Bereich bilden. Während des Betriebs der Maschine können jedoch auch dauernd oder zeitweise Teilbereiche des vom Lichtgitter erfassten Überwachungsbereichs nicht sicherheitskritische Bereiche bilden, da in diesen beispielsweise nichtsicherheitskritische Objekte wie Maschinenteile oder Fördereinheiten eindringen. Bei Eindringen derartiger nichtsicherheitskritischer Objekte ist ein Ansprechen des Lichtgitters und damit verbunden ein Auslösen eines Abschaltbefehls zu vermeiden, da dieser zu unnötigen Stillstandszeiten der Maschine führen würde.

In diesen Fällen können derartige nichtsicherheitsrelevante Bereiche des vom Lichtgitter erfassten Überwachungsbereichs mittels eines sogenannten Blanking- oder Mutingverfahrens ausgeblendet werden. Bei den Strahlachsen des Lichtgitters, welche die ausgeblendeten Bereiche bilden, führt eine Unterbrechung der Sendelichtstrahlen durch einen Objekteingriff nicht zu einem Abschaltbefehl für die Maschine. Nur wenn ein Objekt in einen nicht ausgeblendeten Bereich des Lichtgitters eintritt, führt die Unterbrechung einer Strahlachse in diesem Bereich zu einem Abschaltbefehl für die Maschine.

Durch derartige Blanking- und Mutingverfahren kann die Verfügbarkeit der mit dem Lichtgitter überwachten Maschine erheblich erhöht werden.

Nachteilig bei dem aus der DE 39 39 191 A1 bekannten Lichtgitter ist jedoch, dass dessen Synchronisierung zwingend auf die erste Strahlachse erfolgt. Wird durch ein Blanking- oder Mutingverfahren jedoch ein Bereich des Lichtgitters ausgeblendet, der diese erste Strahlachse enthält, so kann oder muss diese Strahlachse fortlaufend unterbrochen sein. Damit kann aber das Lichtgitter nicht mehr synchronisiert werden, das heißt, für derartige Applikationen ist dieses Lichtgitter prinzipiell nicht einsetzbar.

Die US 4,650,990 A betrifft ein Prozessor gesteuertes Lichtgitter. Das Lichtgitter umfasst ein erstes und zweites Gehäuse, in welchem jeweils eine alternierende Anordnung von Sendern und Empfängern so angeordnet ist, dass jeweils einem Sender in einem Gehäuse ein Empfänger im jeweils anderen Gehäuse gegenüberliegend angeordnet ist. Die Sender emittieren Sendelichtstrahlen mit unterschiedlichen Kodierungen. In jedem Gehäuse befindet sich ein Prozessor. Mit den Prozessoren werden die Sender aktiviert. Zudem werden die Empfangssignale der Empfänger ausgewertet. Im störungsfreien Betrieb des Lichtgitters und bei freiem Überwachungsbereich erfolgt der Betrieb des Lichtgitters derart, dass der erste Sender im ersten Gehäuses Sendelichtstrahlen zum ersten Empfänger im zweiten Gehäuse sendet. Darauf wird der anschließende erste Sender im zweiten Gehäuse aktiviert, so dass dieser Sendelichtstrahlen zum zweiten Empfänger im zweiten Gehäuse sendet. Auf diese Weise werden nacheinander alle Sender des Lichtgitters aktiviert. Daraufhin wird der Zyklus beginnend mit dem ersten Sender wiederholt. Bei einem Objekteingriff wird diese Aktivierungsstufe unterbrochen, da die Sendelichtstrahlen zumindest eines Senders unterbrochen werden, so dass dann ein Alarmsignal ausgelöst wird. Sobald der Objekteingriff verschwunden ist wird wieder beginnend mit dem ersten Sender die Aktivierung der Sender des Lichtgitters unterbrochen.

Das in der DE 43 38 978 A1 beschriebene Lichtgitter besteht aus einer Reihe benachbarter Lichtsender und in einem Abstand gegenüber dieser angeordneten Reihe benachbarter Lichtempfänger. Die Lichtsender und die zugeordneten Lichtempfänger werden einzeln nacheinander zyklisch aktiviert. An jedem Lichtempfänger wird festgestellt, ob bei Aktivierung des zugeordneten Lichtsenders ein Lichtempfangssignal vorhanden ist oder nicht. Durch Einbeziehung der dem zugeordneten Lichtempfänger benachbarten Lichtempfänger beziehungsweise der dem zugeordneten Lichtsender benachbarten Lichtsender in die Auswertung wird zwischen einem in das Schutzfeld eingebrachten Hindernis und einem defekten Lichtsender und/oder Lichtempfänger differenziert.

Die DE 100 46 136 A1 betrifft ein Verfahren zur Identifizierung von Lichtschrankensendern. Bei dem Verfahren spricht der Empfänger einer Lichtschrankenanordnung nur auf einen bestimmten Sender an, der zyklisch ein vorgegebenes Datenmuster abstrahlt. Die Zuordnung der gesendeten Bits des Bitmusters wird in Bezug auf die Lichtachsen von einem vollständigen Übertragungszyklus des Bitmusters zum nächsten vollständigen Übertragungszyklus entsprechend einer vorgegebenen Zuordnungsvorschrift verändert.

Die DE 202 16 230 Ul beschriebene Lichtgitter mit einer vorgegebenen Anzahl von Strahlachsen bildenden Paaren von Sendelichtstrahlen emittierenden Sendern und Empfängern sowie einer Auswerteeinheit zur Auswertung der an den Ausgängen der Empfänger anstehenden Empfangssignale, wobei eine vorgegebene Anz6ahl von Strahlachsen ausblendbar ist, und wobei in der Auswerteeinheit bei Registrieren wenigstens einer Unterbrechung einer nicht ausgeblendeten Strahlachse ein Objektfeststellungssignal generiert wird. Die Anzahl der ausgeblendeten Strahlachsen ist mittels einer Anzeigeeinheit anzeigbar.

Der Erfindung liegt die Aufgabe zugrunde ein Verfahren bereitzustellen, mittels dessen die Funktionalität eines Lichtgitters erweitert werden kann.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschirieben.

Die Erfindung betrifft ein Verfahren zum Betrieb eines Lichtgitters mit einer vorgegebenen Anzahl von Strahlachsen bildenden Paaren von Sendelichtstrahlen emittierenden Sendern und Empfängern, wobei die Sender in einem ersten Gehäuse und die Empfänger in einem zweiten Gehäuse integriert sind. Diese werden zur Detektion von Objekten in einem Überwachungsbereich zyklisch nacheinander aktiviert. Ein beliebiger Teilbereich der Strahlachsen kann ausgeblendet werden, so dass eine Objektdetektion nur mit dem nicht ausgeblendeten Teil der Strahlachsen erfolgt. Den Sendelichtstrahlen der einzelnen Strahlachsen wird jeweils wenigstens eine Kennung aufgeprägt. Zur optischen Synchronisierung der Sender und Empfänger wird wenigstens eine beliebige Strahlachse innerhalb eines Zyklus herangezogen, für welche die Kennung der Sendelichtstrahlen im zugeordneten Empfänger registriert wird. Anhand dieser Kennung erfolgt eine eindeutige Zuordnung dieser Strahlachsen innerhalb der Gesamtheit der Strahlachsen.

Der Grundgedanke der Erfindung besteht darin, dass die Sender und Empfänger des Lichtgitters nicht mehr auf die Sendelichtstrahlen einer fest vorgegebenen Strahlachse synchronisiert werden. Vielmehr kann erfindungsgemäß die Synchronisierung des Lichtgitters auf beliebige Strahlachsen erfolgen.

Dadurch ergibt sich als wesentlicher Vorteil des erfindungsgemäßen Verfahrens, dass bei dem Lichtgitter ein Ausblenden beliebiger Teilbereiche erfolgen kann, wobei dieses Ausblenden beispielsweise durch ein Blanking- oder Mutingverfahren erfolgen kann.

Generell werden dann nur die Strahlachsen der nicht ausgeblendeten Bereiche zur Generierung eines Objektfeststellungssignals herangezogen, welches bei sicherheitstechnischer Applikation zur Generierung eines Abschaltbefehls für eine zu überwachende Maschine oder Anlage dient.

Bei einem Blankingverfahren werden nichtsicherheitskritische Bereiche innerhalb des vom Lichtgitter erfassten Überwachungsbereiches definiert, in welchen nichtsicherheitsrelevante Objekte im Strahlengang der Sendelichtstrahlen der ausgeblendeten Bereiche des Lichtgitters angeordnet sind. Durch die Ausblendung dieser Bereiche führen die Strahlenunterbrechungen dieser Sendelichtstrahlen nicht zur Generierung eines Objektfeststellungssignals.

Bei einem Mutingverfahren werden bevorzugt in Abhängigkeit von Signalen externer Muting-Sensoren nichtsicherheitsrelevante Bereiche des Lichtgitters definiert und ausgeblendet. In diesem Fall können die Strahlachsen in den ausgeblendeten Bereichen wahlweise unterbrochen sein oder nicht. Unabhängig hiervon sind die Strahlachsen von den ausgeblendeten Bereichen von der Generierung des Objektfeststellungssignals ausgenommen. Wie beim Blankingverfahren werden auch hier nur die Strahlachsen der nicht ausgeblendeten Bereiche zur Generierung des Objektfeststellungssignals herangezogen.

Da durch das erfindungsgemäße Verfahren die optische Synchronisierung der Sender nicht auf die Sendelichtstrahlen einer fest vorgegebenen Strahlachse sondern mit beliebigen Strahlachsen durchgeführt werden kann, können erfindungsgemäß beliebige Teilbereiche der Strahlachsen des Lichtgitters ausgeblendet werden. Dies führt zu einer signifikanten Erweiterung der Funktionalität des Lichtgitters.

Bei dem erfindungsgemäßen Verfahren kann wenigstens eine Strahlachse zur Synchronisierung der Sender und Empfänger verwendet werden. Diese kann eine beliebige Strahlachse innerhalb der Gesamtheit der Strahlachsen sein, wobei als einzige Voraussetzungen erfüllt sein müssen, dass für diese Strahlachsen der jeweilige Empfänger die Sendelichtstrahlen des zugeordneten Senders empfängt, und dass dieser wenigstens eine Strahlachse innerhalb der Gesamtheit der Strahlachsen eindeutig zugeordnet werden kann.

Gemäß einer ersten Variante der Erfindung kann den Sendelichtstrahlen der einzelnen Strahlachsen jeweils eine Kennung aufgeprägt sein, wobei diese Kennungen eine eindeutige Identifizierung der Strahlachsen ermöglichen. Alternativ können den Sendelichtstrahlen der einzelnen Strahlachsen jeweils wenigstens zwei Kennungen aufgeprägt sein, wobei die Kombinationen dieser Kennungen eine eindeutige Kennzeichnung der einzelnen Strahlachsen bilden. In beiden Fällen reicht dann aufgrund der eindeutigen Identifizierbarkeit eine Strahlachse zur optischen Synchronisierung des Lichtgitters aus.

In vielen Fällen stehen nur einfache, in ihrer Anzahl begrenzte Codes zur Ausbildung der Kennungen für die Sendelichtstrahlen der Strahlachsen zur Verfügung, so dass wenigstens einige der Kennungen mehrfach für verschiedene Strahlachsen verwendet werden. Auch in diesen Fällen kann eine Synchronisierung auf beliebige Strahlachsen erfolgen, wobei in diesem Fall wenigstens zwei Strahlachsen innerhalb eines Zyklus zur Synchronisierung verwendet werden. In diesem Fall erfolgt eine eindeutige Zuordnung dieser zur Synchronisierung verwendeten Strahlachsen durch die Kennungen deren Sendelichtstrahlen und durch die Relativlage dieser Strahlachsen innerhalb der Gesamtheit der Strahlachsen.

Die Erfindung wird im Nachstehenden anhand der Zeichnungen erläutert. Es zeigen:
- Figur 1: Schematische Darstellung eines Lichtgitters zur Erfassung von Objekten in einem Überwachungsbereich.
- Figur 2: Darstellung des Lichtgitters gemäß Figur 1 bei einem in einer ersten Position liegenden Objekt zur Definition eines Blanking-Bereichs.

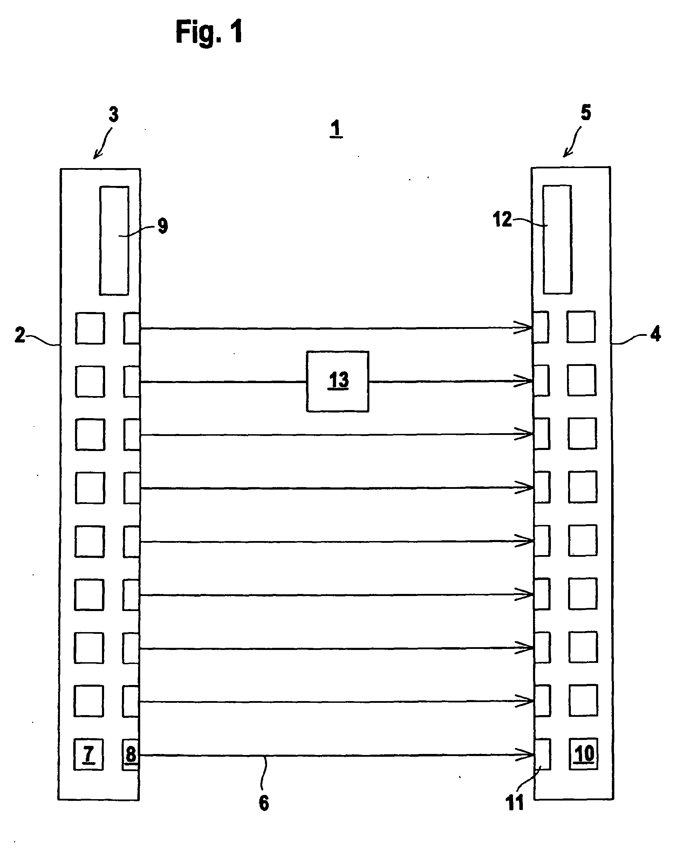

Figur 1 zeigt den Aufbau eines Lichtgitters 1 zur Überwachung eines Überwachungsbereichs. Das Lichtgitter 1 weist eine in einem ersten Gehäuse 2 integrierte Sendereinheit 3 und eine in einem zweiten Gehäuse 4 integrierte Empfängereinheit 5 auf.

Die Sendereinheit 3 weist eine Anordnung von Sendelichtstrahlen 6 emittierenden Sendern 7 auf. Die Sender 7 bestehen vorzugsweise aus identisch ausgebildeten Leuchtdioden und sind in Abstand nebeneinander liegend angeordnet, wobei die Sender 7 vorzugsweise äquidistant angeordnet sind. Zur Strahlformung der Sendelichtstrahlen 6 ist jedem Sender 7 eine Sendeoptik 8 vorgeordnet. Die Sendeoptiken 8 sind im Bereich der Frontwand des Gehäuses 2 hinter einem nicht separat dargestellten Austrittsfenster angeordnet.

Die optischen Achsen der im Überwachungsbereich gerührten Sendelichtstrahlen 6 verlaufen parallel zueinander in der Ebene des Überwachungsbereichs.

Die Sender 7 werden von einer Sender-Steuereinheit 9 angesteuert. Im vorliegenden Ausführungsbeispiel werden die Sender 7 im Pulsbetrieb betrieben. Die Sender 7 emittieren somit Sendelichtimpulse mit einem vorgegebenen PulsPausen-Verhältnis. Die einzelnen Sender 7 emittieren zyklisch nacheinander Sendelichtimpulse, wobei die Taktung über die Sender-Steuereinheit 9 folgt. Dabei werden innerhalb eines Zyklus die Sender 7 entsprechend ihrer Reihenfolge in der Sendereinheit 3 in einer vorgegebenen Scanrichtung nacheinander aktiviert.

Die Empfängereinheit 5 weist eine Anordnung von identisch ausgebildeten, nebeneinander liegend angeordneten Empfängern 10 auf. Die Empfänger 10 bestehen vorzugsweise jeweils aus einer Fotodiode und sind äquidistant angeordnet. Jedem Empfänger 10 ist eine Empfangsoptik 11 vorgeordnet. Dabei liegt jeweils ein Empfänger 10 einem Sender 7 der Sendereinheit 3 gegenüber. Die Strahlformung der Sendelichtstrahlen 6 ist im vorliegenden Fall derart gewählt, dass bei freiem Strahlengang die Sendelichtstrahlen 6 eines Senders 7 jeweils nur auf den gegenüberliegend angeordneten Empfänger 10 treffen. Jeder Sender 7 und der diesem zugeordnete Empfänger 10 bildet eine Strahlachse des Lichtgitters 1. Die Gesamtheit der Strahlachsen des Lichtgitters 1 definiert den mit diesem erfassten Überwachungsbereich. Das Lichtgitter 1 gemäß Figur 1 weist insgesamt neun derartiger Strahlachsen auf.

Die Empfänger 10 werden über eine Empfänger-Steuereinheit 12 gesteuert. Die am Ausgang der Empfänger 10 anstehenden Empfangssignale werden in einer Auswerteeinheit, die Bestandteil der Empfänger-Steuereinheit 12 ist, ausgewertet. Bei freiem Strahlengang des Lichtgitters 1 treffen die Sendelichtstrahlen 6 ungehindert auf die zugeordneten Empfänger 10 und generieren dort einem freien Strahlengang entsprechende Referenz-Empfangssignale. Insbesondere erfolgt die Bewertung der Empfangssignale in der Auswerteeinheit mit einem Schwellwert, wobei die Amplituden der Referenz-Empfangssignale oberhalb des Schwellwerts liegen.

Dringt ein Objekt in den Überwachungsbereich ein, so wird der Strahlengang der Sendelichtstrahlen 6 wenigstens eines Senders 7 unterbrochen. Im vorliegenden Fall besteht das Objekt aus einem Körperteil 13 einer Person. Das Empfangssignal des zugeordneten Empfängers 10 liegt dann unterhalb des Schwellwerts, das heißt an diesem Empfänger 10 werden keine Referenz-Empfangssignale registriert.

Die Unterbrechungen der Strahlachsen werden in der Auswerteeinheit zur Generierung eines Objektfeststellungssignals ausgewertet. Das Objektfeststellungssignal ist als binäres Schaltsignal ausgebildet, welche die Schaltabstände "0" und "1" aufweist. Der Schaltzustand "0" entspricht einem freien Strahlengang des Lichtgitters 1, d.h. in der Steuereinheit wurde kein Objekt registriert. Der Schaltzustand "1" entspricht einem Objekteingriff in den Strahlengang des Lichtgitters 1. Vorzugsweise reicht bereits die Unterbrechung einer Strahlachse aus, damit ein Objekteingriff gegeben ist. Durch die Generierung eines derartigen Objektfeststellungssignals wird ein Abschaltbefehl zum Abschalten einer Maschine oder Anlage generiert, deren Vorfeld mit dem Lichtgitter 1 überwacht wird.

Das Lichtgitter 1 bildet somit eine Personenschutzeinrichtung, die verhindert, dass sich Personen während des Betriebes der Maschine in deren Vorfeld aufhalten.

In zahlreichen Applikationen können außer Personen als sicherheitskritische Objekte auch Objekte in den Strahlengang des Lichtgitters 1 eintreten, die nicht zur Auslösung eines Objektfeststellungssignals führen sollen. Beispielsweise können derartige Objekte von Maschinenteilen oder von beweglichen Objekten, insbesondere an der Maschine zu bearbeitenden Werkstücken, gebildet sein, die nicht zu einer Gefährdung von Personen führen. Bei Eintritt derartiger Objekte wäre ein Stillsetzen der Maschine über das Objektfeststellungssignal unnötig.

Um derartige unnötige Abschaltbefehle bei Eintritt von derartigen Objekten in den Strahlengang des Lichtgitters 1 zu verhindern, werden Blanking-Bereiche als Teilbereiche des Überwachungsbereiches definiert, innerhalb derer ein Objekteingriff nicht zur Generierung eines Objektfeststellungssignal und damit nicht zu einem Abschalten der Maschine führt.

Die Blanking-Bereiche sind dabei so zu wählen, dass diese exakt den Teilbereichen des Überwachungsbereichs, innerhalb derer diese Objekte liegen, entsprechen.

Zur Unterdrückung eines Objektfeststellungssignals durch derartige Objekte werden die im jeweiligen Blanking- Bereich liegenden Strahlachsen in der Auswerteeinheit ausgeblendet, so dass Strahlunterbrechungen dieser Strahlachsen nicht zur Generierung eines Objektfeststellungssignals führen.

Desweiteren wird oftmals sogar das Vorhandensein derartiger Objekte im Überwachungsbereich gefordert. Wäre zum Beispiel ein Werkstück im Bereich der Maschine nicht vorhanden, so läge eine Fehlfunktion vor. Daher wird in diesen Fällen vorteilhaft ein Objektfeststellungssignal gerade dann generiert, wenn das betroffene Objekt nicht den Blanking-Bereich vollständig abdeckt.

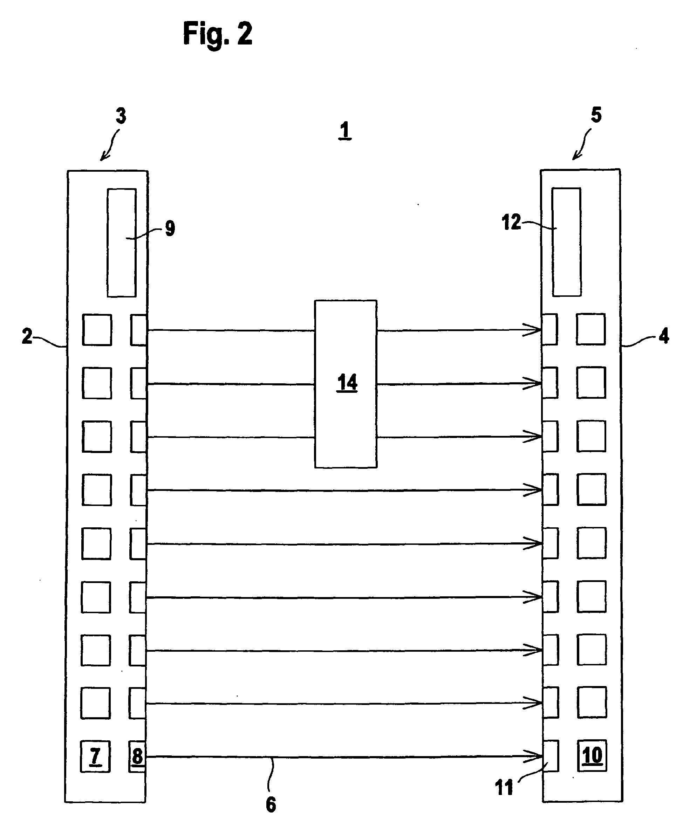

Figur 2 zeigt das Lichtgitter 1 mit einem im Überwachungsbereich liegenden stationären Pfeiler 14 als nicht sicherheitskritischem Objekt, welches einen Blanking-Bereich definiert, der im vorliegenden Fall die ersten drei Strahlachsen des Lichtgitters 1 umfasst.

Unabhängig davon, ob das Lichtgitter 1 mit oder ohne ausgeblendeten Bereichen betrieben wird, muss die Aktivierung der Sender 7 synchron zur Aktivierung der Empfänger 10 erfolgen, damit jeweils die Sender 7 und Empfänger 10 einer Strahlachse gleichzeitig aktiviert sind.

Erfindungsgemäß erfolgt die Synchronisierung auf optischem Weg anhand der Sendelichtstrahlen 6 wenigstens einer beliebigen Strahlachse des Lichtgitters 1.

In einer ersten Ausführungsform ist den Sendelichtstrahlen 6 der einzelnen Sender 7 jeweils eine individuelle, eindeutige Kennung aufgeprägt. Hierzu emittieren die Sender 7 Sendelichtstrahlen 6 in Form von Pulsfolgen, wobei in den Pulsfolgen die Kennungen kodiert sind. Die Kennungen der einzelnen Sendelichtstrahlen 6 sind empfangsseitig in der Auswerteeinheit hinterlegt, so dass für den Empfänger 10 jeder Strahlachse bekannt ist, welche Kennung der diesem zugeordnete Sender 7 aussendet.

Durch die Vergabe von eindeutigen Kennungen für die Sendelichtstrahlen 6 der einzelnen Strahlachsen erfolgt die Synchronisierung anhand einer einzigen Strahlachse. Bei der Synchronisierung wird in der Auswerteeinheit geprüft, ob ein Empfänger 10 eine gültige, das heißt eine vom zugeordneten Sender 7 der jeweiligen Strahlachse stammende Kennung empfängt. Ist dies der Fall werden ausgehend von dieser Strahlachse aus die Sender 7 und Empfänger 10 der in Scanrichtung folgenden Strahlachsen einzeln nacheinander aktiviert. Da durch den Empfang der gültigen Kennung für die erste Strahlachse, der Synchronisiervorgang bereits abgeschlossen wird, wird unmittelbar darauf das Lichtgitter 1 für die Objekterfassung aktiviert, das heißt mit diesem können dann sofort Objektfeststellungssignale zur Objekterfassung generiert werden.

Bei der Anordnung gemäß Figur 1, bei welcher sämtliche Strahlachsen den Überwachungsbereich bilden, innerhalb derer ein Objekteingriff zu einem Objektfeststellungssignal führt, kann insbesondere die erste Strahlachse zur Synchronisierung des Lichtgitters 1 verwendet werden.

Bei der Anordnung gemäß Figur 2 bilden die ersten drei Strahlachsen einen ausgeblendeten Bereich, in welchem der Pfeiler 14 als nicht sicherheitskritisches Objekt angeordnet ist. Der Überwachungsbereich des Lichtgitters 1, innerhalb dessen Objekteingriffe zu einem Objektfeststellungssignal führen, erstreckt sich somit von der vierten bis zur neunten Strahlachse. Da die ersten drei Strahlachsen im ausgeblendeten Bereich fortlaufend unterbrochen sind, stehen diese nicht zur Synchronisierung zur Verfügung. Vielmehr erfolgt die Synchronisierung anhand einer der Strahlachse aus dem verbleibenden, um den ausgeblendeten Bereich reduzierten Überwachungsbereich und zwar analog zum Beispiel gemäß Figur 2. Beispielsweise kann in diesem Fall die vierte Strahlachse zur Synchronisierung der Sender 7 und Empfänger 10 des Lichtgitters 1 dienen.

In einer alternativen Ausgestaltung können den Sendelichtstrahlen 6 der einzelnen Strahlachsen jeweils zwei Kennungen aufgeprägt sein. Die Sender 7 emittieren dabei wiederum Sendelichtstrahlen 6 in Form von Pulsfolgen, in welchen die Kennungen kodiert sind. Dabei sendet jeder Sender 7 zunächst eine eine Kennung A bildende Pulsfolge aus. Darauf folgt eine definierte Pause, auf welche der Sender 7 eine eine Kennung B bildende Pulsfolge aussendet. Für den Fall, dass jeweils drei verschiedene Kennungen A und drei verschiedene Kennungen B zur Verfügung stehen, ergibt die Kombination der Kennungen A und B für die Sendelichtstrahlen 6 der Strahlachsen insgesamt 3² = 9 verschiedene Kombinationsmöglichkeiten. Somit können durch diese Kombinationen der Kennungen A und B die neun Strahlachsen des Lichtgitters 1 wieder eindeutig gekennzeichnet werden. Damit kann die Synchronisierung der Sender 7 und der Empfänger 10 analog zur ersten Ausführungsform erfolgen.

Gemäß einer dritten Ausgestaltung der Erfindung können den Sendelichtstrahlen 6 des Lichtgitters 1 Kennungen oder Kombinationen von Kennungen aufgeprägt sein, mittels derer keine eindeutige Unterscheidung der einzelnen Strahlachsen mehr möglich ist.

Für die Anordnung gemäß den Figuren 1 und 2 ist ein derartiger Fall gegeben, wenn den Sendelichtstrahlen 6 der neun Strahlachsen jeweils eine Kennung Aᵢ (i = 1...9) aufgeprägt ist, insgesamt aber nur acht verschiedene Kennungen zur Verfügung stehen. Dies bedeutet, dass eine der Kennungen doppelt vorkommt.

In diesem Fall ist anhand einer Strahlachse keine eindeutige Synchronisierung der Sender 7 und Empfänger 10 durchführbar. Würde nämlich die Strahlachse zur Synchronisierung herangezogen, deren Kennung doppelt vorhanden ist, so könnte nicht mit Sicherheit der dieser Strahlachse zugeordnete Empfänger 10 identifiziert werden. Zwar würde bei freiem Strahlengang dieser Empfänger 10 die Sendelichtstrahlen 6 des zugeordneten Empfängers 10 derselben Strahlachse erhalten. Wäre jedoch beispielsweise ein spiegelndes Objekt im Überwachungsbereich angeordnet, so könnten daran die Sendelichtstrahlen 6 des Senders 7 der für die Synchronisierung vorgesehenen Strahlachse an diesem reflektiert und zum Empfänger 10 der Strahlachse geleitet werden, welche den Sender 7 aufweist, der dieselbe Kennung emittiert. Damit würde der Sender 7 der zur Synchronisierung vorgesehenen Strahlachse nicht auf den zugeordneten Empfänger 10 dieser Strahlachse sondern auf einen Empfänger 10 einer anderen Strahlachse synchronisiert.

Um dies zu vermeiden, werden im vorliegenden Fall zwei Strahlachsen zur Synchronisierung der Sender 7 und der Empfänger 10 herangezogen.

In einem ersten Schritt wird in der Auswerteeinheit der erste Empfänger 10 registriert, welcher eine gültige Kennung empfängt. Bei der Anordnung gemäß Figur 1 kann dies die erste Strahlachse sein. Bei der Anordnung gemäß Figur 2 kann dies die vierte Strahlachse sein. Welche an den ausgeblendeten Bereich anschließt. Sobald eine gültige Kennung für eine solche Strahlachse registriert wurde, wird ein Synchronisationssignal generiert, welches die Sender 7 und Empfänger 10 der weiteren Strahlachsen nacheinander aktiviert. Dabei bleibt das Lichtgitter 1 noch deaktiviert, das heißt, es erfolgt noch keine Freigabe zur Generierung von Objektfestellungssignalen.

Zur Komplettierung der Synchronisierung wird dann allgemein gefordert, dass innerhalb eines Zyklus für eine weitere Strahlachse eine gültige Kennung erkannt wird. Nur wenn dies der Fall ist, liegt eine erfolgreiche Synchronisierung vor und der Betrieb des Lichtgitters 1 wird freigegeben.

Im einfachsten Fall erfolgt diese zweistufige Synchronisierung derart, dass zunächst eine gültige Kennung für eine beliebige Strahlachse erkannt werden muss. Danach werden die weiteren Strahlachsen zyklisch nacheinander aktiviert, wobei gefordert wird, dass die für die unmittelbar folgende Strahlachse eine gültige Kennung registriert wird.

Wird generell die zweite gültige Kennung nicht innerhalb des vorgegebenen Zeitfensters registriert wird die Synchronisierung abgebrochen und danach neu gestartet.

Durch die Verwendung zweier Strahlachsen kann aufgrund der in der Auswerteeinheit gespeicherten zeitlichen Folge der Kennungen für die einzelnen Strahlachsen eine eindeutige Zuordnung dieser Strahlachsen innerhalb der Gesamtheit der Strahlachsen gewährleistet werden. Durch diese eindeutige Zuordnung wird eine fehlerfreie Synchronisierung auf definierte Sender 7 und Empfänger 10 jeweils einer Strahlachse gewährleistet.

### Bezugszeichenliste

(1) Lichtgitter
(2) Gehäuse
(3) Sendereinheit
(4) Gehäuse
(5) Empfängereinheit
(6) Sendelichtstrahlen
(7) Sender
(8) Sendeoptik
(9) Sender-Steuereinheit
(10) Empfänger
(11) Empfangsoptik
(12) Empfänger-Steuereinheit
(13) Körperteil
(14) Pfeiler

## Patentansprüche

1. Verfahren zum Betrieb eines Lichtgitters (1) mit einer vorgegebenen Anzahl von Strahlachsen bildenden Paaren von Sendelichtstrahlen (6) emittierenden Sendern (7) und Empfängern (10), welche zur Detektion von Objekten in einem Überwachungsbereich zyklisch nacheinander aktiviert werden, wobei die Sender (7) in einem ersten Gehäuse (2) und die Empfänger (10) in einem zweiten Gehäuse (4) integriert sind, **dadurch gekennzeichnet, dass** ein beliebiger Teilbereich der Strahlachsen ausgeblendet werden kann und eine Objektdetektion nur mit dem nicht ausgeblendeten Teil der Strahlachsen erfolgt, dass den Sendelichtstrahlen (6) der einzelnen Strahlachsen jeweils wenigstens eine Kennung aufgeprägt wird, und dass zur optischen Synchronisierung der Sender (7) und Empfänger (10) wenigstens eine beliebige Strahlachse innerhalb eines Zyklus herangezogen wird, für welche die Kennung der Sendelichtstrahlen (6) im zugeordneten Empfänger (10) registriert wird und anhand .derer eine eindeutige Zuordnung dieser Strahlachse innerhalb der Gesamtheit der Strahlachsen erfolgt.

2. Verfahren nach Anspruch 1, **dadurch gekennzeichnet, dass** die Kennungen der für die sendelichtsäahlen (6) der einzelnen Strahlachsen in einer Auswerteeinheit hinterlegt werden und die aktuell an den Empfängern (10) registrierten Kennungen mit diesen verglichen werden um zu über" prüfen ob für die jeweilige Strahlachse eine gültige Kennung empfangen wunde.

3. Verfahren nach einem der, Anspruche 1 oder2, : **dadurch gekennzeichnet**, das den Sendelichtstrahlen (6) der Strahlachsen jeweils eine Kennung aufgeprägt wird, wobei diese Kennungen die einzelnen Strahlachsen eindeutig kennzeichnen.

4. Verfahren nach einem der Ansprüche 1 oder 2, **dadurch gekennzeichnet, dass** den Sendelichtstrahlen (6) der Strahlachsen jeweils wenigstens zwei Kennungen aufgeprägt werden, wobei die Kombinationen der den Sendelichtstrahlen (6) einer Strahlachse aufgeprägten Kennungen die einzelnen Strahlachsen eindeutig kennzeichnen. ,

5. Verfahren nach einem der Ansprüche 3 oder 4, **dadurch gekennzeichnet, dass** der Empfang einer gültigen Kennung für eine beliebige Strahlachse ein Synchronisatiorissignal zum Start der zyklischen Aktivierung der Sender (7) und Empfänger (10) bildet.

6. Verfahren nach Anspruch 5, **dadurch gekennzeichnet, dass** mit dem Synchronisationssignal die Freigabe des Lichtgitters (1) zur Objekterfassung erfolgt.

7. Verfahren nach einem der Ansprüche 1 oder 2, **dadurch gekennzeichnet, dass** bei Kennungen, welche die einzelnen Strahlachsen nicht eindeutig kennzeichnen, zur Synchronisierung der Sender (7) und Empfänger (10) wenigstens zwei Strahlachsen innerhalb eines Zyklus herangezogen werden. .

8. Verfahren nach Anspruch 7, **dadurch gekennzeichnet, dass** zur Synchronisierung der Sender (7) und der Empfänger (10) aufeinander folgende Strahlachsen herangezogen werden. ' :

9. Verfahren nach einem der Ansprüche 7 oder 8, **dadurch gekennzeichnet, dass** bei Empfang einer gültigen Kennung für eine erste, beliebige Strahlachse ein Synchronisatiönssignal zum Start der zyklische Aktivierung der Sender (7) wird Empfänger (10) generiert wird, und dass nur bei Empfang einer gültigen Kennung für wenigstens eine zweite Strahlachse ins nerhalb des durch das ..Synchronisationssignal gestarteten Zyklus die Freigabe des Lichtgitters (1) zur Objekterfassung erfolgt.

10. Verfahren nach Anspruch 9, **dadurch gekennzeichnet, dass** die Synchronisierung abgebrochen wird, falls innerhalb des auf das Synchronisätionssignal folgenden Zyklus keine Kennung einer weiteren Strahlachse registriert wird.

11. Verfahren nach einem der Ansprüche 1 bis 10, **dadurch gekennzeichnet, dass** bei Unterbrechung einer Strahlachse während des Betriebs des Lichtgitters (1) eine Objektmeldung generiert wird.

## Claims

1. Method for operating a light grating (1) with a predetermined number of pairs of transmitters (7), which form beam axes, and emit transmitted light beams (6), and receivers (10), which are cyclically activated in succession for detection of objects in a monitoring region, wherein the transmitters (7) are integrated in a first housing (2) and the receivers (10) in a second housing (4), **characterised in that** any desired sub-region of the beam axes can be excluded and object detection carried out only by the non-excluded part of the beam axes, that at least one respective identification is imposed on the transmitted light beams (6) of the individual beam axes and that for optical synchronisation of the transmitters (7) and receivers (10) at least one desired beam axis is utilised within a cycle for which the identification of the transmitted light beams (6) is registered in the associated receiver (10) and on the basis of which a unique assignment of this beam axis within the entirety of the beam axes takes place.

2. Method according to claim 1, **characterised in that** the identifications for the transmitted light beams (6) of the individual beam axes are filed in an evaluating unit and the identifications currently registered at the receivers (10) are compared with these in order to check whether a valid identification was received for the respective beam axis.

3. Method according to one of claims 1 and 2, **characterised in that** a respective identification is imposed on the transmitted light beams (6) of the beam axes, wherein these identifications uniquely characterise the individual beam axes.

4. Method according to one of claims 1 and 2, **characterised in that** at least two respective identifications are imposed on the transmitted light beams (6) of the beam axes, wherein the combinations of the identifications imposed on the transmitted light beams (6) of a beam axis uniquely characterise the individual beam axes.

5. Method according to one of claims 3 and 4, **characterised in that** the reception of a valid identification for a desired beam axis forms a synchronisation signal for the start of the cyclic activation of the transmitters (7) and receivers (10).

6. Method according to claim 5, **characterised in that** freeing of the object grating (1) for object detection takes place by the synchronisation signal.

7. Method according to one of claims 1 and 2, **characterised in that** in the case of identifications which do not uniquely characterise individual beam axes at least two beam axes within one cycle are utilised for synchronisation of the transmitters (7) and receivers (10).

8. Method according to claim 7, **characterised in that** successive beam axes are utilised for synchronisation of the transmitters (7) and receivers (10).

9. Method according to one of claims 7 and 8, **characterised in that** on reception of a valid identification for a first, desired beam axis a synchronisation signal for the start of the cyclic activation of the transmitters (7) and receivers (10) is generated and that only on reception of a valid identification for at least one second beam axis within the cycle started by the synchronisation signal is freeing of the light grating (1) for object detection carried out.

10. Method according to claim 9, **characterised in that** the synchronisation is broken off if within the cycle following the synchronisation signal no identification of a further beam axis is registered.

11. Method according to any one of claims 1 to 10, **characterised in that** on interruption of a beam axis during operation of the light grating (1) an object report is generated.

## Revendications

1. Procédé de fonctionnement d'une barrière photoélectrique (1) comportant un nombre prédéfini de paires d'émetteurs (7) émettant des rayons lumineux d'émission (6) et de récepteurs (10), lesquelles forment des axes de faisceau qui sont activés cycliquement tour à tour pour détecter des objets dans une zone de surveillance, les émetteurs (7) étant intégrés dans un premier boîtier (2) et les récepteurs (10) dans un deuxième boîtier (4), **caractérisé en ce qu'**une zone partielle quelconque des axes de faisceau peut être occultée et qu'une détection d'objet n'a lieu qu'avec la partie non occultée des axes de faisceau, qu'au moins un identificateur est chaque fois appliqué aux rayons lumineux d'émission (6) des différents axes de faisceau, et que, pour la synchronisation optique des émetteurs (7) et des récepteurs (10), on utilise au moins un axe de faisceau quelconque pendant un cycle, pour lequel l'identificateur des rayons lumineux d'émission (6) est enregistré dans le récepteur (10) associé et au moyen duquel on effectue une affectation univoque de cet axe de faisceau au sein de la totalité des axes de faisceau.

2. Procédé selon la revendication 1, **caractérisé en ce que** les identificateurs des rayons lumineux d'émission (6) des différents axes de faisceau sont stockés dans une unité d'évaluation et les identificateurs actuellement enregistrés aux récepteurs (10) sont comparés avec ceux-ci pour vérifier si un identificateur valide a été reçu pour l'axe de faisceau respectif.

3. Procédé selon une des revendications 1 ou 2, **caractérisé en ce qu'**un identificateur est chaque fois appliqué aux rayons lumineux d'émission (6) des axes de faisceau, ces identificateurs identifiant de manière univoque les différents axes de faisceau.

4. Procédé selon une des revendications 1 ou 2, **caractérisé en ce qu'**au moins deux identificateurs sont chaque fois appliqués aux rayons lumineux d'émission (6) des axes de faisceau, les combinaisons des identificateurs appliqués aux rayons lumineux d'émission (6) d'un axe de faisceau identifiant de manière univoque les différents axes de faisceau.

5. Procédé selon une des revendications 3 ou 4, **caractérisé en ce que** la réception d'un identificateur valide pour un axe de faisceau quelconque constitue un signal de synchronisation pour le démarrage de l'activation cyclique des émetteurs (7) et des récepteurs (10).

6. Procédé selon la revendication 5, **caractérisé en ce que** le signal de synchronisation entraîne le déblocage de la barrière photoélectrique (1) pour la détection d'objets.

7. Procédé selon une des revendications 1 ou 2, **caractérisé en ce qu'**en cas d'identificateurs qui n'identifient pas les différents axes de faisceau d'une manière univoque, on utilise au moins deux axes de faisceau pendant un cycle pour synchroniser les émetteurs (7) et les récepteurs (10).

8. Procédé selon la revendication 7, **caractérisé en ce que** l'on utilise des axes de faisceau consécutifs pour synchroniser les émetteurs (7) et les récepteurs (10).

9. Procédé selon une des revendications 7 ou 8, **caractérisé en ce qu'**en cas de réception d'un identificateur valide pour un premier axe de faisceau quelconque, un signal de synchronisation pour le démarrage de l'activation cyclique des émetteurs (7) et des récepteurs (10) est généré, et que le déblocage de la barrière photoélectrique (1) pour la détection d'objets n'a lieu qu'en cas de réception d'un identificateur valide pour au moins un deuxième axe de faisceau pendant le cycle démarré par le signal de synchronisation.

10. Procédé selon la revendication 9, **caractérisé en ce que** la synchronisation est interrompue si aucun identificateur d'un autre axe de faisceau n'est enregistré pendant le cycle consécutif au signal de synchronisation.

11. Procédé selon une des revendications 1 à 10, **caractérisé en ce qu'**un signal de détection d'objet est généré en cas d'interruption d'un axe de faisceau pendant le fonctionnement de la barrière photoélectrique (1).
